# EUROPEAN PATENT APPLICATION

(11) **EP 1 770 507 A2**
(43) Date of publication of application: **04.04.2007**
(21) Application number: 06251642.2
(22) Date of filing: 28.03.2006
(51) Int. Cl.: G06F 9/38

(54) **Pipeline processing based on RISC architecture**

(30) Priority: 30.09.2005 JP 2005288374
(71) Applicant: Fujitsu Ltd., Kawasaki-shi, Kanagawa 211-8588 (JP)
(72) Inventor: Zhang, Jun, Fujitsu Limited, Kawasaki-shi, Kanagawa 211-8588 (JP)
(74) Representative: Hitching, Peter Matthew

(57) **Abstract**

A data processing apparatus has a data memory (418), and a non-stalling write-back control circuit (425). The non-stalling write-back control circuit performs control so that, if a write instruction for writing data to the data memory encounters a write failure due to a cache miss or memory access contention, any succeeding instruction is allowed to continue to execute provided that the succeeding instruction is not a memory access instruction.

## Description

### CROSS REFERENCE TO RELATED APPLICATION

This application is based upon and claims the benefit of priority from the prior Japanese Patent Application No. 2005-288374, filed on September 30, 2005, the entire contents of which are incorporated herein by reference.

### BACKGROUND OF THE INVENTION

### 1. Field of the Invention

The present invention relates to a data processing apparatus and a data processing method and, more particularly, to a data processing apparatus and a data processing method, having a data memory access function, for performing pipeline processing based on RISC (Reduced Instruction Set Computer) architecture.

### 2. Description of the Related Art

Research and development has been proceeding on data processing apparatus that performs RISC pipeline processing and that has a write-back function in a RISC pipeline.

In the prior art, Japanese Unexamined Patent Publication (Kokai) No. 09-050376, for example, discloses a data processing apparatus suitable for pipeline processing, wherein the amount of circuitry is reduced and data processing speed improved by reducing the number of existing pipeline registers and short paths, and by performing control so that if a succeeding instruction has the same write destination as a preceding instruction, the write operation of the preceding instruction is disabled, and so that of the succeeding instructions, a particular instruction whose processing result is determined in a stage later than a prescribed stage will be completed at the same time as the instruction that precedes the particular instruction.

Further, in the prior art, Japanese Unexamined Patent Publication (Kokai) No. 05-006313, for example, discloses a memory access control apparatus in which, in order to speed up memory access in the usual nibble mode by performing the memory access simultaneously with an error correction, data read out of a memory is temporarily stored in a data holding device, and the data read operation and the error correction operation in an error correcting device are processed by pipelining, thereby aiming to speed up the access. In this case, since the corrected data cannot be written back at the same time, the address of the data is held or the corrected data is temporarily stored and, after the memory access of the processor is completed, the write back operation is performed.

The prior art and its associated problem will be described in detail later with reference to relevant drawings.

### SUMMARY OF THE INVENTION

An object of the present invention is to provide a data processing apparatus and a data processing method in which, if a write failure occurs due to a cache miss or memory access contention, each succeeding instruction can continue to execute provided that it is not a memory access instruction and, if a read failure occurs, each succeeding instruction can continue to execute provided that it is not a memory access instruction or that the instruction is not dependent on the contents that should have been accessed by the failed read instruction.

According to the present invention, there is provided a data processing apparatus comprising a data memory; and a non-stalling write-back control circuit which performs control so that, if a write instruction for writing data to the data memory encounters a write failure due to a cache miss or memory access contention, any succeeding instruction is allowed to continue to execute provided that the succeeding instruction is not a memory access instruction.

Further, according to the present invention, there is provided a data processing apparatus comprising a data memory; and a non-stalling write-back control circuit which performs control so that, if a read instruction for reading data from the data memory encounters a read failure due to a cache miss or memory access contention, any succeeding instruction is allowed to continue to execute provided that the succeeding instruction is not a memory access instruction or that the succeeding instruction is not dependent on contents that should have been accessed by the read instruction that encountered the read failure.

According to the present invention, there is also provided a data processing method which has a data memory access function and which performs processing in a pipeline, wherein if a write instruction for writing data to a data memory encounters a write failure due to a cache miss or memory access contention, any succeeding instruction is allowed to continue to execute provided that the succeeding instruction is not a memory access instruction.

In addition, according to the present invention, there is also provided a data processing method which has a data memory access function and which performs processing in a pipeline, wherein if a read instruction for reading data from a data memory encounters a read failure due to a cache miss or memory access contention, any succeeding instruction is allowed to continue to execute provided that the succeeding instruction is not a memory access instruction or that the succeeding instruction is not dependent on contents that should have been accessed by the read instruction that encountered the read failure.

### BRIEF DESCRIPTION OF THE DRAWINGS

The present invention will be more clearly understood from the description of the preferred embodiments as set forth below with reference to the accompanying drawings, wherein:
Fig. 1 is a block diagram showing the basic configuration of one example of a prior art data processing apparatus;
Fig. 2 is a diagram showing one example of a program for the data processing apparatus shown in Fig. 1;
Fig. 3 is a diagram for explaining the behavior of a pipeline when executing the program shown in Fig. 2;
Fig. 4 is a block diagram showing the basic configuration of a data processing apparatus according to a first embodiment of the present invention;
Fig. 5 is a diagram showing one example of a program for the data processing apparatus shown in Fig. 4;
Fig. 6 is a diagram for explaining the behavior of a pipeline when executing the program shown in Fig. 5;
Fig. 7 is a block diagram showing the basic configuration of a data processing apparatus according to a second embodiment of the present invention;
Fig. 8 is a diagram showing one example of a program for the data processing apparatus shown in Fig. 7; and
Fig. 9 is a diagram for explaining the behavior of a pipeline when executing the program shown in Fig. 8.

### DESCRIPTION OF THE PREFERRED EMBODIMENTS

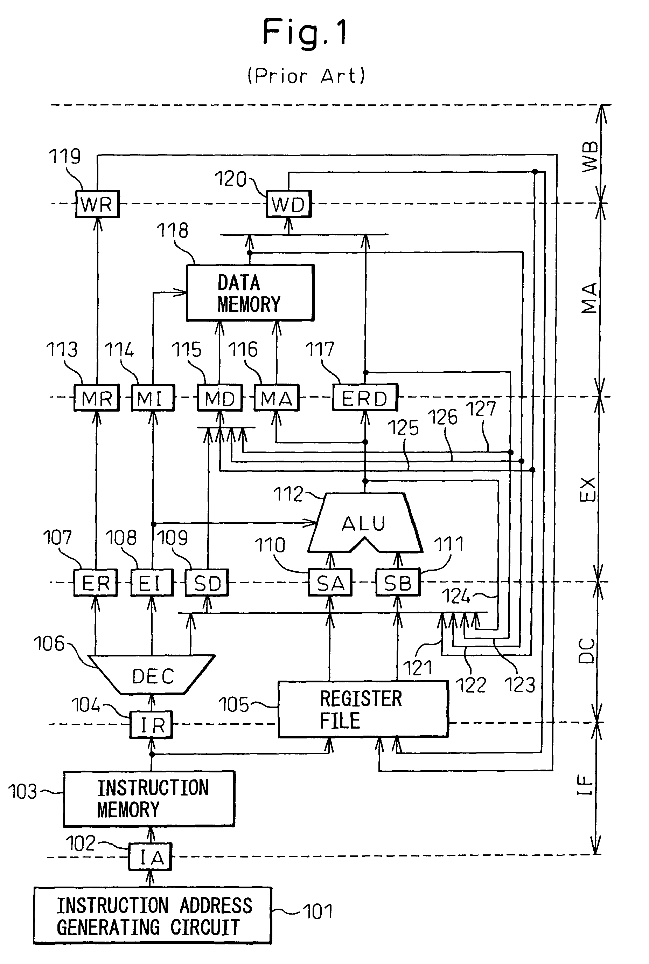

Before describing in detail the preferred embodiments of the present invention, a conventional data processing apparatus and its associated problem will be described with reference to Figs. 1 to 3.

Figure 1 is a block diagram showing the basic configuration of one example of the prior art data processing apparatus. In the data processing apparatus shown in Fig. 1, a RISC pipeline comprises, for example, an IF (Instruction Fetch) stage, a DC (Decoding) stage, an EX (Execution) stage, a MA (Memory Access) stage, and a WB (Write Back) stage. Instructions are sequentially executed in the order of IF, DC, EX, MA, and WB.

That is, in the IF stage, an instruction is fetched from an instruction memory 103 in accordance with an instruction address register 102 (IA) generated by an instruction address generating circuit 101, and is written to an instruction register 104 (IR). A register file address for reading an operand of the operation from a register file 105 is extracted from the instruction code fetched from the instruction memory 103 and is transferred to the register file 105. At the same time, the instruction address generating circuit 101 generates the next instruction address by incrementing or branching.

In the DC stage, the output of the instruction register 104 is decoded by an instruction decoder 106 (DEC), and immediate data, instruction type signal, and write-back register address are output. The operands read out of the register file 105 are suitably selected along with the immediate data and with the data fed back via internal data buses 121, 122, 123, and 124, and the selected data are transferred to input registers 110 (SA) and 111 (SB) of an arithmetic logic unit 112 (ALU) and also to a write data register 109 (SD) used for an instruction (write instruction) for writing the data to a data memory. At the same time, the write-back register address and the instruction type signal, output from the decoder 106, are stored in an ER register 107 (ER) and an EI register 108 (EI), respectively.

In the EX stage, the arithmetic logic unit 112 reads the operands of the operation from the input registers 110 and 111, and performs the operation in accordance with the instruction type signal output from the EI register 108. Here, in the case of a data memory access instruction, the memory address calculated by the arithmetic logic unit 112 is stored in a data memory address register 116 (MA). At the same time, the data output from the write data register 109 is suitably selected along with the data fed back via internal buses 125, 126, and 127, and the selected data are stored in a MA-stage write data register 115 (MD).

On the other hand, if the instruction is not a data memory access instruction, the result of the operation computed by the arithmetic logic unit 112 is stored in an operation result register 117 (ERD). The ER register 107 and the EI register 108 transfer their contents directly to a MR register 113 (MR) and a MI register 114 (MI) for the next stage.

In the MA stage, if the instruction is not a data memory access instruction, the contents of the operation result register 117 are transferred directly to a write-back data register 120 (WD). On the other hand, if the instruction is an instruction (read instruction) for reading data from the data memory according to the instruction type signal output from the MI register 114, then the data is read out of the data memory 118 in accordance with the data memory address register 116, and transferred to the write-back data register 120.

If the instruction is a write instruction for writing data to the data memory according to the instruction type signal output from the MI register 114, then the contents of the write data register 115 are written to the data memory 118 in accordance with the data memory address register 116. Further, if the instruction is an arithmetic instruction or a data memory read instruction, the contents of the MR register 113 are transferred directly to a write-back address register 119 (WR).

In the WB stage, in the case of an arithmetic instruction or a data memory read instruction, the contents of the write-back data register 120 are written to the register file 105 in accordance with the write-back address register 119.

Here, if the succeeding instruction is an instruction that uses the result of the preceding instruction, the result of the preceding instruction can be used without waiting for the completion of the preceding instruction; therefore, the results of the respectively preceding instructions are fed back to the corresponding registers via the internal buses 121, 122, 123, 124, 125, 126, and 127.

In the prior art data processing apparatus described with reference to Fig. 1, if a memory access failure occurs during execution of a data memory access instruction in the MA stage due to a cache miss or memory access contention, the entire pipeline has had to be caused to stall. In this case, each succeeding instruction is blocked even when it has no dependency on the data memory access instruction that encountered the access failure.

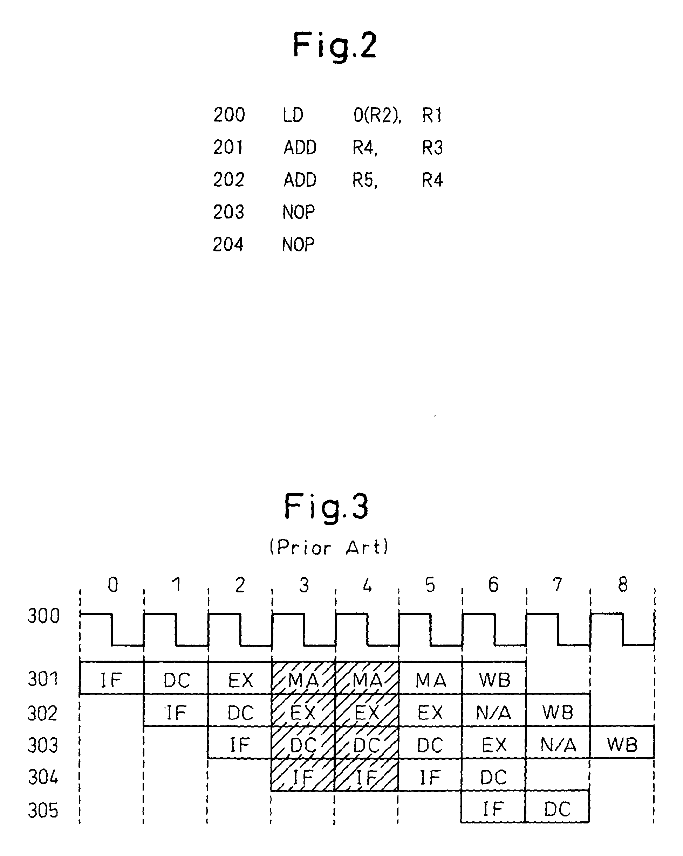

Figure 2 is a diagram showing one example of a program for the data processing apparatus shown in Fig. 1. In Fig. 2, a data memory read instruction LD (200) adds immediate data 0 to the data of register R2 contained in the register file, reads data from the data memory 118 by using the result of the operation as the data memory address, and writes the data to the register R1 in the register file. An add instruction ADD (201) adds the data of register R3 to the data of register R4, and writes the result of the operation to the register R3. An add instruction ADD (202) adds the data of register R4 to the data of register R5, and writes the result of the operation to the register R4. Instructions 202 and 203 are NOP (No OPeration) instructions.

Figure 3 is a diagram for explaining the behavior of the pipeline when executing the program shown in Fig. 2. In Fig. 3, reference numeral 300 indicates the clock for the pipeline, 301 the pipeline corresponding to the instruction 200, 302 the pipeline corresponding to the instruction 201, 303 the pipeline corresponding to the instruction 202, 304 the pipeline corresponding to the instruction 203, and 305 the pipeline corresponding to the instruction 204. The stages in the same column are executed concurrently in the same clock cycle.

As shown in Fig. 3, when the LD instruction 200 failed to read data in cycle 3, the pipeline stalls and remains stalled until cycle 5 when a read becomes possible. Further, the succeeding instructions 201 and 202 are blocked for the duration of two cycles even when they have no direct dependency on the LD instruction 200. Accordingly, a three-cycle slot occurs between the instruction 204 and the instruction 203, causing a degradation in the performance of the data processing apparatus.

Embodiments of a data processing apparatus and a data processing method according to the present invention will be described in detail below with reference to the accompanying drawings.

### [Embodiment 1]

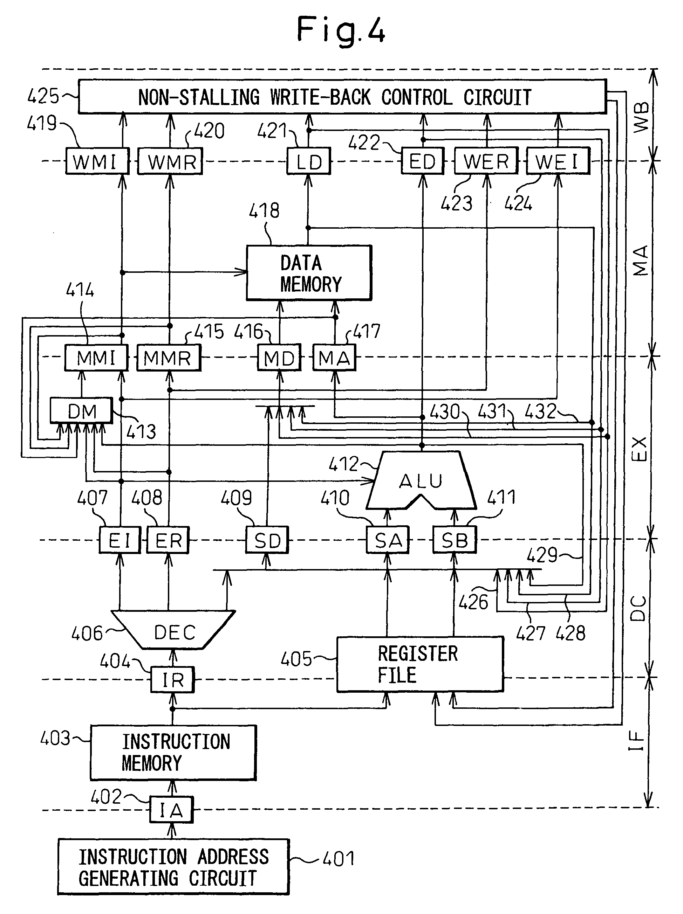

Figure 4 is a block diagram showing the basic configuration of a data processing apparatus according to a first embodiment of the present invention. In the data processing apparatus of the first embodiment, the IF stage and the DC stage are configured similarly to those of the prior art data processing apparatus described with reference to Fig. 1.

That is, in the IF stage, an instruction is fetched from an instruction memory 403 in accordance with an instruction address register 402 (IA) generated by an instruction address generating circuit 401, and is written to an instruction register 404 (IR). A register file address for reading an operand of the operation from a register file 405 is extracted from the instruction code fetched from the instruction memory 403 and is transferred to the register file 405. At the same time, the instruction address generating circuit 401 generates the next instruction address by incrementing or branching.

In the DC stage, the output of the instruction register 404 is decoded by an instruction decoder 406 (DEC), and immediate data, instruction type signal, and write-back register address are output. The operands read out of the register file 405 are suitably selected along with the immediate data and with the data fed back via internal data buses 426, 427, 428, and 429, and are transferred to input registers 410 (SA) and 411 (SB) of an arithmetic logic unit 412 (ALU) and also to a write data register 409 (SD) used for a data memory write instruction. At the same time, the write-back register address and the instruction type signal, output from the decoder 406, are stored in an ER register 408 (ER) and an EI register 407 (EI), respectively.

In the EX stage, the arithmetic logic unit 412 reads the operands of the operation from the input registers 410 and 411, and performs the operation in accordance with the instruction type signal output from the EI register 407. Here, in the case of a data memory access instruction, the memory address calculated by the arithmetic logic unit 412 is stored in a data memory address register 417 (MA). At the same time, the data output from the write data register 409 is suitably selected along with the data fed back via internal buses 430, 431, and 432, and the selected data are stored in a MA-stage write data register 416 (MD).

On the other hand, if the instruction is not a data memory access instruction, the result of the operation computed by the arithmetic logic unit 112 is transferred directly to the WB stage by bypassing the MA stage, and stored in an operation result write-back register 422 (ED) in the WB stage. The ER register 408 and the EI register 407 also transfer their contents directly to a WER register 423 (WER) and a WEI register 424 (WEI) in the WB stage by bypassing the MA stage. Here, even when an access failure occurs during execution of the preceding data memory access instruction due to a cache miss or memory access contention, the succeeding instruction is not blocked but can continue to execute provided that the instruction has no dependency on the preceding data memory access instruction that failed.

A DM controller 413 (DM) analyzes the instruction type signals of the EI register 407 and MMI register 414 (MMI), and compares the contents of the ER register 408, MMR register 415 (MMR), and MA register 417. If the instruction in the EX stage is a data memory write instruction, and if that instruction has the same write address as the preceding write instruction in the MA stage where a write failure has occurred due to a cache miss or memory access contention, then the preceding write instruction in the MA stage is aborted.

Further, if the instruction in the EX stage is not dependent on the contents that should have been accessed by the preceding read instruction in the MA stage where a read failure has occurred due to a cache miss or memory access contention, and if the two instructions have the same write-back address, then the preceding read instruction in the MA stage is aborted.

In the MA stage, if the instruction is a write instruction for writing data to the data memory according to the instruction type signal output from the MMI register 414, then the contents of the write data register 416 are written to the data memory 418 in accordance with the data memory address register 417. On the other hand, if the instruction is an instruction (read instruction) for reading data from the data memory according to the instruction type signal output from the MMI register 414, then the data is read out of the data memory 418 in accordance with the data memory address register 417, and transferred to a readout data write-back data register 421 (LD). The contents of the MMI register 414 and the contents of the MMR register 415 are transferred directly to a WMI register 419 (WMI) and a WMR register 420 (WMR), respectively.

In the WB stage, even when the preceding read instruction failed to read data due to a cache miss or memory access contention, the succeeding instruction can continue to execute provided that the succeeding instruction has no dependency on the preceding instruction that failed; here, the occurrence of write-back contention is allowed which is a situation where the result of the operation of the succeeding instruction, held in the ED register 422, and the readout data, held in the LD register 421, are being tried to be simultaneously written to the register file 405. By analyzing the contents of the WMI register 419, WMR register 420, WER register 423, and WEI register 424, a non-stalling write-back control circuit 425 performs control to write back or hold or discard the data obtained as the result of the operation and the data read from the data memory, without causing the pipeline to stall.

If the succeeding instruction is an instruction that uses the result of the preceding instruction, the result of the preceding instruction can be used without waiting for the completion of the preceding instruction; therefore, the results of the respectively preceding instructions are fed back to the corresponding registers via the internal buses 426, 427, 428, 429, 430, 431, and 432.

Next, a description will be given of a control method of the non-stalling write-back circuit in the first embodiment of the data processing apparatus according to the present invention.

In the non-stalling write-back control circuit 425 contained in the data processing apparatus of the first embodiment, when write-back contention occurs with the result of the operation of the succeeding instruction, held in the ED register 422, and the readout data held in the LD register 421 being tried to be simultaneously written to the register file 405, priority is always given to the result of the operation of the succeeding instruction held in the ED register 422.

In the WB stage, if there is no write-back data either in the ED register 422 or in the LD register 421, write back is not performed.

In the WB stage, if there is write-back data only in the ED register 422 or in the LD register 421, then that data is written back to the register file 405.

In the WB stage, if there is write-back data in the ED register 422 as well as in the LD register 421, and if the write-back address output from the WER register 423 and the write-back address output from the WMR register 420 are the same, then the data held in the ED register 422 is written back to the register file 405, and the data held in the LD register 421 is discarded.

In the WB stage, if there is write-back data in the ED register 422 as well as in the LD register 421, but the write-back address output from the WER register 423 and the write-back address output from the WMR register 420 are different, then the data held in the ED register 422 is written back to the register file 405, and the data held in the LD register 421 is held as is.

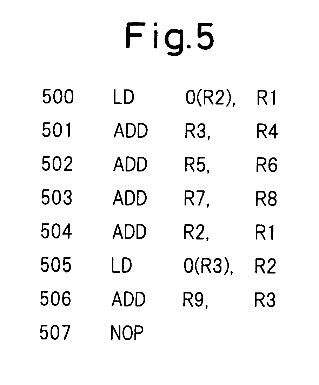

Figure 5 is a diagram showing one example of a program for the data processing apparatus shown in Fig. 4. In Fig. 5, a data memory read instruction LD (500) adds immediate data 0 to the data of register R2 contained in the register file, reads data from the data memory 418 by using the result of the operation as the data memory address, and writes the data to the register R1 in the register file.

An add instruction ADD (501) adds the data of register R3 to the data of register R4, and writes the result of the operation to the register R4. An add instruction ADD (502) adds the data of register R5 to the data of register R6, and writes the result of the operation to the register R6. An add instruction ADD (503) adds the data of register R7 to the data of register R8, and writes the result of the operation to the register R8. An add instruction ADD (504) adds the data of register R2 to the data of register R1, and writes the result of the operation to the register R1.

An instruction (read instruction) LD (505) for reading data from the data memory adds immediate data 0 to the data of register R3, reads data from the data memory 418 by using the result of the operation as the data memory address, and writes the data to the register R2. An add instruction ADD (506) adds the data of register R9 to the data of register R3, and writes the result of the operation to the register R3. An instruction 507 is a NOP (No OPeration) instruction.

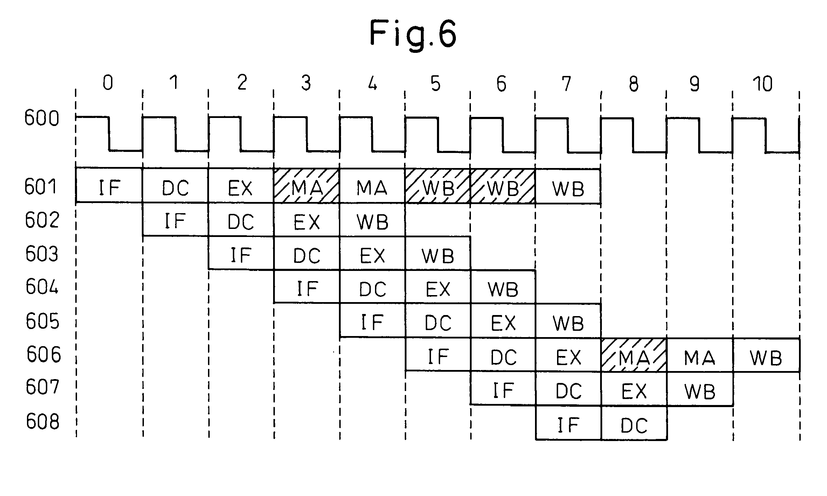

Figure 6 is a diagram for explaining the behavior of the pipeline when executing the program shown in Fig. 5. In Fig. 6, reference numeral 600 indicates the clock for the pipeline, 601 the pipeline corresponding to the instruction 500, 602 the pipeline corresponding to the instruction 501, 603 the pipeline corresponding to the instruction 502, 604 the pipeline corresponding to the instruction 503, 605 the pipeline corresponding to the instruction 504, 606 the pipeline corresponding to the instruction 505, 607 the pipeline corresponding to the instruction 506, and 608 the pipeline corresponding to the instruction 507. The stages in the same column are executed concurrently in the same clock cycle.

As shown in Fig. 6, even when the LD instruction 500 failed to read data from the data memory 418 in cycle 3, the succeeding ADD instruction continues to execute. In the WB stage, in cycle 4 the result of the operation obtained by the ADD instruction 501 and held in the ED register 422 is the only data to be written back; therefore, this operation result is written back.

In cycles 5 and 6, the results of the operations of the ADD instructions 502 and 503, each held in the ED register 422, respectively have priority; therefore, the data held in the ED register 422 is written back, and the data held in the LD register 421 is held as is. Since the ADD instruction 504 uses the data read out by the LD instruction 500, in cycle 5 the ADD instruction 504 uses the data held in the LD register 421 and fed back via the internal bus 426.

In cycle 7, since the write-back address held in the WMR register 420 is the same as the write-back address held in the WER register 423, the data held in the ED register 422 has priority and is thus written back, and the data held in the LD register 421 is discarded. In cycle 8, even when the LD instruction 505 failed to read data from the data memory 418, the succeeding instruction continues to execute.

In cycle 9, the result of the operation obtained by the ADD instruction 506 and held in the ED register 422 is the only data to be written back; therefore, this operation result is written back. In cycle 10, the only data is the data held in the LD register 421 and read out by the LD instruction 505; therefore, this readout data is written back.

As described above, even when the read instruction failed to read data from the data memory 418 in cycle 3 or cycle 8, the succeeding instruction is not blocked but continues to execute, and the performance of the data processing apparatus can thus be enhanced.

### [Embodiment 2]

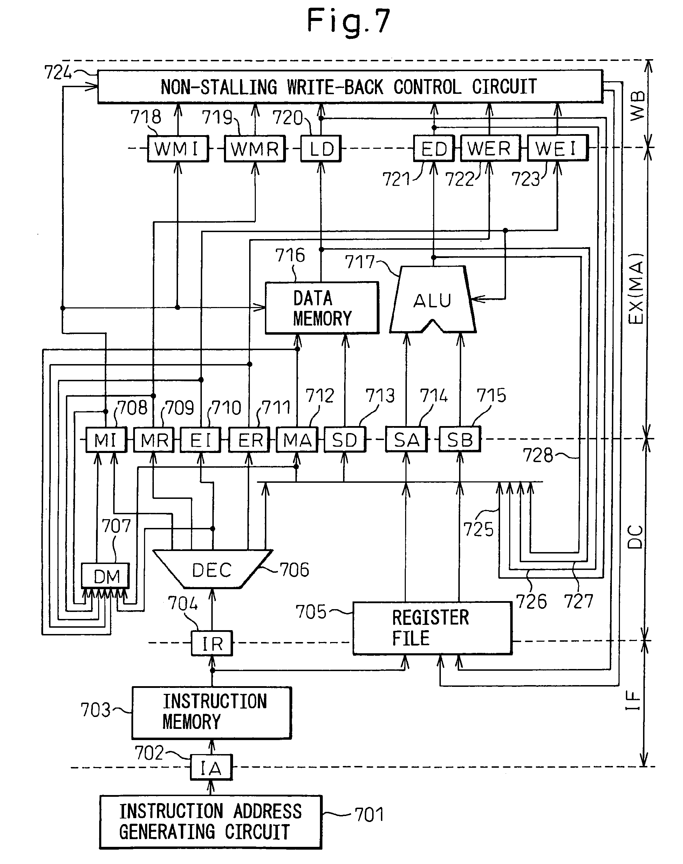

Figure 7 is a block diagram showing the basic configuration of a data processing apparatus according to a second embodiment of the present invention. In Fig. 7, reference numeral 701 is an instruction address generating circuit, 702 is an instruction address register (IA), 703 is an instruction memory, 704 is an instruction register (IR), 706 is a decoder, and 707 is a DM controller. Further, reference numeral 709 is a MR register, 710 is an EI register, 711 is an ER register, 712 is a MA register, 713 is a SD register, 714 is a SA register, and 715 is a SB register.

In the data processing apparatus of the second embodiment, the memory address to be used by the data memory access instruction is not the value calculated by an arithmetic logic unit 717 (ALU), but the value suitably selected from among the values read from a register file 705 and the values fed back via internal buses 725, 726, 727, and 728; accordingly, the difference from the data processing apparatus of the first embodiment is that the MA stage and the EX stage are contained in the same stage.

A non-stalling write-back control circuit 724 analyzes the contents of a WMI register 718 (WMI), WEI register 723 (WEI), and MI register 708 (MI), compares the write-back address output from a WMR register 719 (WMR) with the write-back address output from a WER register 722 (WER), and generates a PSWA priority (Priority if Same Write-back Address) and a write-back right.

Using the PSWA priority and the write-back right, the data obtained as the result of the operation and the data read from the data memory can be written back to the register file 705 or held or discarded without causing the pipeline to stall, even when write-back contention occurs with the result of the operation of the succeeding instruction, held in an ED register 721 (ED), and the readout data held in a LD register 720 (LD) being tried to be simultaneously written to the register file 705.

Next, a description will be given of a control method of the non-stalling write-back circuit in the second embodiment of the data processing apparatus according to the present invention.

The non-stalling write-back control circuit 724 contained in the data processing apparatus of the second embodiment uses the concept of PSWA priority and write-back right. Between the result of the operation of the succeeding instruction, held in the ED register 721, and the readout data held in the LD register 720, if the write-back address output from the WER register 722 and the write-back address output from the WMR register 719 are the same, the data of the register having the PSWA priority can be written back to the register file 705. If the write-back addresses are different, the data of the register having the write-back right can be written back to the register file 705.

In the non-stalling write-back control circuit 724 contained in the data processing apparatus of the second embodiment, the PSWA priority is given to the ED register 721 in the next cycle after resetting.

In the WB stage, if there is no write-back data either in the ED register 721 or in the LD register 720, write back is not performed, and the PSWA priority is given to the ED register 721 in the next cycle.

In the WB stage, if there is write-back data only in the ED register 721 or in the LD register 720, then the write-back right is given to that data, and the PSWA priority is given to the ED register 721 in the next cycle.

In the WB stage, if there is write-back data in the ED register 721 as well as in the LD register 720, and if the write-back address output from the WER register 722 and the write-back address output from the WMR register 719 are the same, then the data of the register having the PSWA priority is written back, the other data is discarded, and the PSWA priority is given to the ED register 721 in the next cycle.

In the WB stage, if there is write-back data in the ED register 721 as well as in the LD register 720, but the write-back address output from the WER register 722 and the write-back address output from the WMR register 719 are different, then if the contents of the MI stage 708 shows that the instruction in the MA stage is a read instruction for reading data from the data memory 716, then the write-back right is given to the LD register 720, the data held in the ED register 721 is held as is, and the PSWA priority is given to the LD register 720 in the next cycle. On the other hand, if the contents of the MI stage 708 shows that the instruction in the MA stage is not a data memory read instruction, then the write-back right is given to the ED register 721, the data held in the LD register 720 is held as is, and the PSWA priority is given to the ED register 721 in the next cycle.

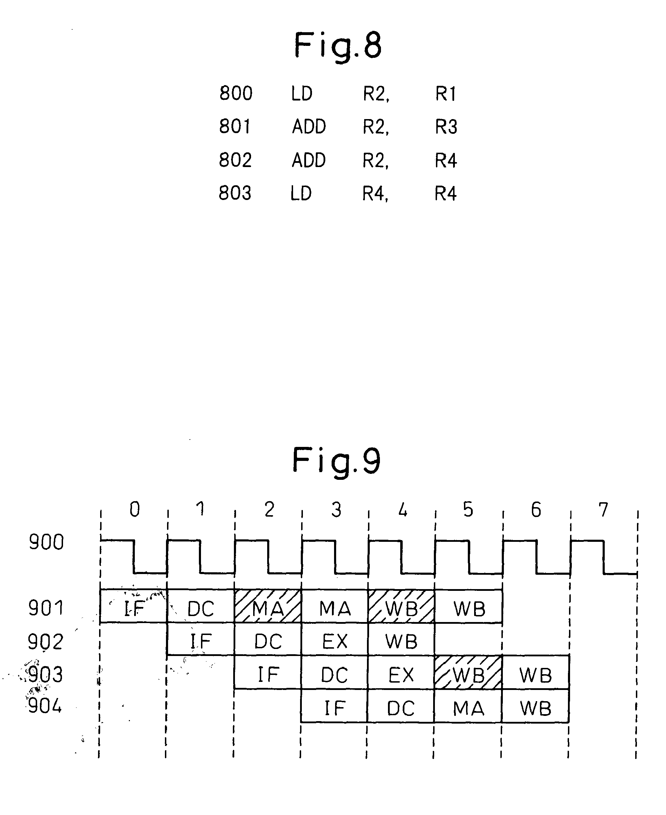

Figure 8 is a diagram showing one example of a program for the data processing apparatus shown in Fig. 7. In Fig. 8, a data memory read instruction LD (800) reads data from the data memory 716 by using the data of register R2 in the register file 705 as the data memory address, and writes the readout data to the register R1 in the register file 705. An add instruction ADD (801) adds the data of register R2 to the data of register R3, and writes the result of the operation to the register R3.

An add instruction ADD (802) adds the data of register R2 to the data of register R4, and writes the result of the operation to the register R4. A data memory read instruction LD (803) reads data from the data memory 716 by using the data of register R4 as the data memory address, and writes the readout data to the register R4.

Figure 9 is a diagram for explaining the behavior of the pipeline when executing the program shown in Fig. 8. In Fig. 9, reference numeral 900 indicates the clock for the pipeline, 901 the pipeline corresponding to the instruction 800, 902 the pipeline corresponding to the instruction 801, 903 the pipeline corresponding to the instruction 802, and 904 the pipeline corresponding to the instruction 803. The stages in the same column are executed concurrently in the same clock cycle.

As shown in Fig. 9, even when the LD instruction 800 failed to read data from the data memory 716 in cycle 2, the succeeding ADD instruction continues to execute. In the WB stage, in cycle 3 there is no write-back data either in the ED register 721 or in the LD register 720; therefore, write back is not performed, and the PSWA priority is given to the ED register 721 in cycle 4.

In cycle 4, there is write-back data in both registers, that is, the result of the operation of the ADD instruction 801 is in the ED register 721 and the data read out by the LD instruction 800 in the LD register 720 (LD), but the write-back address output from the WER register 722 and the write-back address output from the WMR register 719 are different, and the contents of the MI stage 708 shows that in the MA stage there is no read instruction for reading data from the data memory 716; therefore, the write-back right is given to the ED register 721, the data read out by the LD instruction 800 and held in the LD register 720 is held as is, and the PSWA priority is given to the ED register 721 in cycle 5.

In cycle 5, there is write-back data in both registers, that is, the result of the operation of the ADD instruction 802 is in the ED register 721 and the data read out by the LD instruction 800 in the LD register 720, but the write-back address output from the WER register 722 and the write-back address output from the WMR register 719 are different, and the contents of the MI stage 708 shows that the instruction 803 in the MA stage is a read instruction for reading data from the data memory 716; therefore, the write-back right is given to the LD register 720, the result of the operation of the ADD instruction 802 held in the ED register 721 is held as is, and the PSWA priority is given to the LD register 720 in cycle 6.

Since the LD instruction 803 uses the result of the operation of the ADD instruction 802, in cycle 4 the LD instruction 803 uses the result of the operation output from the arithmetic logic unit 717 and fed back via the internal bus 728. In cycle 6, there is write-back data in both registers, that is, the result of the operation of the ADD instruction 802 is in the ED register 721 and the data read out by the LD instruction 803 in the LD register 720; here, since the write-back address output from the WER register 722 and the write-back address output from the WMR register 719 are the same, and since the LD register 720 has the PSWA priority, the data read out by the LD instruction 803 and held in the LD register 720 is written back, and the result of the operation of the ADD instruction 802 held in the ED register 721 is discarded.

As described above, in the data processing apparatus according to the second embodiment of the present invention, even when the read instruction failed to read data from the data memory 716 in cycle 2, the succeeding instruction is not blocked but continues to execute, and the performance of the data processing apparatus can thus be enhanced.

As described above, according to the present invention, the performance can be enhanced by concealing the penalty due to a data memory access failure to a certain degree. In particular, according to the present invention, in the case of a data memory write instruction a delay can be concealed so that the write instruction can be completed within a single cycle even when a cache miss or memory access contention occurs.

The present invention is applied primarily to data processing apparatuses that have a data memory access function and that perform pipeline processing based on RISC architecture, but the invention is not limited to this particular type of data processing apparatus but can be applied to various types of data processing apparatus that perform pipeline processing.

Many different embodiments of the present invention may be constructed without departing from the scope of the present invention, and it should be understood that the present invention is not limited to the specific embodiments described in this specification, except as defined in the appended claims.

## Claims

1. A data processing apparatus comprising:
a data memory; and
a non-stalling write-back control circuit which performs control so that, if a write instruction for writing data to said data memory encounters a write failure due to a cache miss or memory access contention, any succeeding instruction is allowed to continue to execute provided that said succeeding instruction is not a memory access instruction.

2. The data processing apparatus as claimed in claim 1, wherein if said succeeding instruction is a write instruction for writing data to said data memory, and if said succeeding instruction has the same write address as said write instruction that precedes said succeeding instruction and that encountered said write failure due to a cache miss or memory access contention, said non-stalling write-back control circuit aborts said preceding write instruction.

3. A data processing apparatus comprising:
a data memory; and
a non-stalling write-back control circuit which performs control so that, if a read instruction for reading data from said data memory encounters a read failure due to a cache miss or memory access contention, any succeeding instruction is allowed to continue to execute provided that said succeeding instruction is not a memory access instruction or that said succeeding instruction is not dependent on contents that should have been accessed by said read instruction that encountered said read failure.

4. The data processing apparatus as claimed in claim 3, further comprising a register file to which data obtained as an operation result of said succeeding instruction is to be written, and wherein
when said data obtained as said operation result of said succeeding instruction is tried to be written to said register file, if write-back contention occurs as data last read out by said read instruction that precedes said succeeding instruction and that encountered said read failure due to a cache miss or memory access contention is tried to be simultaneously written to said register file, said non-stalling write-back control circuit performs control to write write-back data to said register file according to priority.

5. The data processing apparatus as claimed in claim 4, wherein said non-stalling write-back control circuit generates a PSWA priority and a write-back right in accordance with an execution condition in a pipeline, and writes back or holds or discards said data read out of said data memory and said data obtained as said operation result.

6. The data processing apparatus as claimed in claim 4, wherein if said succeeding instruction has the same write-back address as said read instruction that precedes said succeeding instruction and that encountered said read failure due to a cache miss or memory access contention, and if said succeeding instruction is not dependent on the contents that should have been accessed by said failed read instruction, said non-stalling write-back control circuit aborts said preceding read instruction.

7. The data processing apparatus as claimed in claim 4, wherein if write-back contention occurs with an operation result of said succeeding instruction, held in an ED register, and readout data held in a LD register being tried to be simultaneously written to said register file, said non-stalling write-back control circuit gives priority to said operation result of said succeeding instruction held in said ED register.

8. The data processing apparatus as claimed in claim 4, wherein in WB stage, if there is write-back data in an ED register as well as in a LD register, and if a write-back address output from a WER register and a write-back address output from a WMR register are the same, said non-stalling write-back control circuit writes back the data held in said ED register to said register file, and discards the data held in said LD register.

9. The data processing apparatus as claimed in claim 4, wherein in WB stage, if there is write-back data in an ED register as well as in a LD register, and if a write-back address output from a WER register and a write-back address output from a WMR register are different, said non-stalling write-back control circuit writes back the data held in said ED register to said register file, and holds the data held in said LD register as is.

10. The data processing apparatus as claimed in claim 4, wherein said non-stalling write-back control circuit generates a PSWA priority and a write-back right by analyzing contents of a WMI register, WEI register, and MI register and by comparing a write-back address output from a WMR register with a write-back address output from a WER register.

11. The data processing apparatus as claimed in claim 10, wherein if write-back contention occurs with an operation result of said succeeding instruction, held in an ED register, and readout data held in a LD register being tried to be simultaneously written to said register file, said non-stalling write-back control circuit performs control in accordance with said PSWA priority and said write-back right so that data obtained as said operation result and said data read out of said data memory are written back to said register file or held as is or discarded.

12. The data processing apparatus as claimed in claim 10, wherein in WB stage, if there is no write-back data either in an ED register or in a LD register, said non-stalling write-back control circuit does not perform write-back, and gives said PSWA priority to said ED register in the next cycle.

13. The data processing apparatus as claimed in claim 10, wherein in WB stage, if there is write-back data only in an ED register or in a LD register, said non-stalling write-back control circuit gives said write-back right to said data, and gives said PSWA priority to said ED register in the next cycle.

14. The data processing apparatus as claimed in claim 10, wherein in WB stage, if there is write-back data in an ED register as well as in a LD register, and if said write-back address output from said WER register and said write-back address output from said WMR register are the same, said non-stalling write-back control circuit writes back the data held in the register having said PSWA priority, discards the data held in the other register, and gives said PSWA priority to said ED register in the next cycle.

15. The data processing apparatus as claimed in claim 10, wherein in WB stage, if there is write-back data in an ED register as well as in a LD register, but said write-back address output from said WER register and said write-back address output from said WMR register are different,
then if contents in an MI stage shows that the instruction in an MA stage is a read instruction for reading data from said data memory, said non-stalling write-back control circuit gives said write-back right to said LD register, holds the data held in said ED register as is, and gives said PSWA priority to said LD register in the next cycle, but
if the contents in said MI stage shows that the instruction in said MA stage is not a read instruction for reading data from said data memory, said non-stalling write-back control circuit gives said write-back right to said ED register, holds the data held in said LD register as is, and gives said PSWA priority to said ED register in the next cycle.

16. A data processing method which has a data memory access function and which performs processing in a pipeline, wherein:
if a write instruction for writing data to a data memory encounters a write failure due to a cache miss or memory access contention, any succeeding instruction is allowed to continue to execute provided that said succeeding instruction is not a memory access instruction.

17. The data processing method as claimed in claim 16, wherein if said succeeding instruction is a write instruction for writing data to said data memory, and if said succeeding instruction has the same write address as said write instruction that precedes said succeeding instruction and that encountered said write failure due to a cache miss or memory access contention, said preceding write instruction is aborted.

18. A data processing method which has a data memory access function and which performs processing in a pipeline, wherein:
if a read instruction for reading data from a data memory encounters a read failure due to a cache miss or memory access contention, any succeeding instruction is allowed to continue to execute provided that said succeeding instruction is not a memory access instruction or that said succeeding instruction is not dependent on contents that should have been accessed by said read instruction that encountered said read failure.

19. The data processing method as claimed in claim 18, wherein when data obtained as an operation result of said succeeding instruction is tried to be written to a register file, if write-back contention occurs as data last read out by said read instruction that precedes said succeeding instruction and that encountered said read failure due to a cache miss or memory access contention is tried to be simultaneously written to said register file, control is performed to write write-back data to said register file according to priority.

20. The data processing method as claimed in claim 19, wherein a PSWA priority and a write-back right are generated in accordance with an execution condition in said pipeline, and said data read out of said data memory and said data obtained as said operation result are written back or held as is or discarded.

21. The data processing method as claimed in claim 19, wherein if said succeeding instruction has the same write-back address as said read instruction that precedes said succeeding instruction and that encountered said read failure due to a cache miss or memory access contention, and if said succeeding instruction is not dependent on the contents that should have been accessed by said failed read instruction, said preceding read instruction is aborted.

22. The data processing method as claimed in claim 19, wherein if write-back contention occurs with an operation result of said succeeding instruction, held in an ED register, and readout data held in a LD register being tried to be simultaneously written to said register file, priority is given to said operation result of said succeeding instruction held in said ED register.

23. The data processing method as claimed in claim 19, wherein in WB stage, if there is write-back data in an ED register as well as in a LD register, and if a write-back address output from a WER register and a write-back address output from a WMR register are the same, then the data held in said ED register is written back to said register file, and the data held in said LD register is discarded.

24. The data processing method as claimed in claim 19, wherein in WB stage, if there is write-back data in an ED register as well as in a LD register, and if a write-back address output from a WER register and a write-back address output from a WMR register are different, then the data held in said ED register is written back to said register file, and the data held in said LD register is held as is.

25. The data processing method as claimed in claim 19, wherein a PSWA priority and a write-back right are generated by analyzing contents of a WMI register, WEI register, and MI register and by comparing a write-back address output from a WMR register with a write-back address output from a WER register.

26. The data processing method as claimed in claim 25, wherein if write-back contention occurs with an operation result of said succeeding instruction, held in an ED register, and readout data held in a LD register being tried to be simultaneously written to said register file, control is performed in accordance with said PSWA priority and said write-back right so that data obtained as said operation result and said data read out of said data memory are written back to said register file or held as is or discarded.

27. The data processing method as claimed in claim 25, wherein in WB stage, if there is no write-back data either in an ED register or in a LD register, write-back is not performed, and said PSWA priority is given to said ED register in the next cycle.

28. The data processing method as claimed in claim 25, wherein in WB stage, if there is write-back data only in an ED register or in a LD register, said write-back right is given to said data, while said PSWA priority is given to said ED register in the next cycle.

29. The data processing method as claimed in claim 25, wherein in WB stage, if there is write-back data in an ED register as well as in a LD register, and if said write-back address output from said WER register and said write-back address output from said WMR register are the same, then the data held in the register having said PSWA priority is written back, the data held in the other register is discarded, and said PSWA priority is given to said ED register in the next cycle.

30. The data processing method as claimed in claim 25, wherein in WB stage, if there is write-back data in an ED register as well as in a LD register, but said write-back address output from said WER register and said write-back address output from said WMR register are different,
then if contents in an MI stage shows that the instruction in an MA stage is a read instruction for reading data from said data memory, said write-back right is given to said LD register, the data held in said ED register is held as is, and said PSWA priority is given to said LD register in the next cycle, but
if the contents in said MI stage shows that the instruction in said MA stage is not a read instruction for reading data from said data memory, said write-back right is given to said ED register, the data held in said LD register is held as is, and said PSWA priority is given to said ED register in the next cycle.
